# EUROPÄISCHE PATENTANMELDUNG

(11) **EP 1 091 228 A2**
(43) Veröffentlichungstag der Anmeldung: **11.04.2001**
(21) Anmeldenummer: 00121688.6
(22) Anmeldetag: 04.10.2000
(51) Int. Cl.: G02B 6/42

(54) **Faseroptisches Sende-Bauelement mit präzise einstellbarer Einkopplung**

(30) Priorität: 06.10.1999 DE 19948372
(71) Anmelder: Infineon Technologies AG, 81669 München (DE)
(72) Erfinder: Althaus, Hans-Ludwig, 93138 Lappersdorf (DE); Reill, Joachim, 93197 Zeitlarn (DE); Hartl, Alfred, 93186 Kneiting (DE)
(74) Vertreter: Graf Lambsdorff, Matthias, Dr.

(57) **Zusammenfassung**

Bei einem faseroptischen Sende-Bauelement werden entweder eine Justagehülse (3) oder ein Faserflansch mit einem Polarisationsfilter (5) versehen und in einem Justageschritt derart mit dem Gehäuse (2) einer Lichtemissionseinrichtung (1) verbunden, daß bei einer vorherigen Messung der durch den Polarisationsfilter (5) hindurchgetretenen Lichtleistung eine axiale Winkelposition der Justagehülse (3) oder des Faserflanschs in bezug auf das Gehäuse (2) ermittelt wird und die Befestigung bei dieser relativen Winkelposition vorgenommen wird.

## Beschreibung

Die vorliegende Erfindung betrifft ein faseroptisches Sende-Bauelement nach dem Oberbegriff des Patentanspruchs 1. Insbesondere bezieht sich die Erfindung auf ein derartiges faseroptisches Sende-Bauelement, bei welchem mittels eines internen Polarisationsfilters ein definierter Anteil der von einer Lichtemissionseinrichtung emittierten Lichtleistung präzise eingestellt und in eine Lichtleitfaser eingekoppelt werden kann.

Eine bestimmte Klasse von faseroptischen Sende-Bauelementen weist ein Lichtemissions-Bauelement, ein dieses umgebendes rohrförmiges oder zylindrisch geformtes Gehäuse, und eine an das Gehäuse lichtausgangsseitig befestigte Justagehülse auf, in die an ihrem dem Gehäuse abgewandten Ende eine Lichtleitfaser eingeführt und in geeigneter Weise befestigt werden kann. Ein solches faseroptisches Sende-Bauelement wird auch als Receptacle-Laser bezeichnet. Die Lichtemissionseinrichtung besteht in der Regel aus einem Halbleiterlaser und optischen Elementen, wie Prismen und mindestens einer Linse, durch die das von dem Halbleiterlaser emittierte Strahlungsbündel umgelenkt und auf das Eintrittsende der in der Justagehülse befestigten Lichtleitfaser gebündelt werden kann. Andere faseroptische Sende-Bauelemente, nämlich die sogenannten Pigtail-Laser, weisen dagegen keine Justagehülse, sondern einen Faserflansch auf, der eine zentrale Duchgangsöffnung enthält, in der eine Lichtleiterfaser fest montiert wird.

Bei diesen faseroptischen Sende-Bauelementen ist es oftmals wünschenswert, bereits bei der Herstellung dafür zu sorgen, daß lediglich ein definierter Anteil der von dem Lichtemissions-Bauelement emittierten Lichtleistung in die Lichtleitfaser eingekoppelt wird. Es ist jedoch ohne einstellbaren Abstand der Lichtleitfaser zum jeweiligen Lichtemissions-Bauelement sehr schwierig oder nahezu unmöglich, während der Justage eine definierte vorgewählte Einkopplung in die Lichtleitfaser einzustellen, weil eine große Anzahl von Variablen diese Einkopplung bestimmt. Dieses Problem wurde bei Receptacle-Lasern bisher dadurch gelöst, daß die Lichtemissions-Bauelemente, also in der Regel die Halbleiterlaser, bezüglich ihrer Abstrahlcharakteristik (Fokuslage, Schielwinkel) und Abstrahlleistung vermessen und selektiert wurden. Zur Justage wird der charakteristischen Laserdiode eine geeignete Justagehülse mit der entsprechenden Länge zum Faseranschlag zugeordnet. Mit den hierbei auftretenden Toleranzen, die sich jeweils addieren, ist die jeweilige Einkopplung nur in einem weiten Toleranzbereich einstellbar. Die Bauelemente mit der gewünschten Einkopplung müssen durch eine Messung dann mit entsprechend niedriger Ausbeute selektiert werden, wenn ein bestimmtes Einkoppelfenster in der Anwendung gefordert wird. Des weiteren ist ein hoher logistischer Aufwand für die Lagerhaltung von unterschiedlichen Justagehülsen notwendig.

Um die Einkopplung während der Justage einstellbar zu machen, verwenden einige Hersteller ein zusätzliches Verbindungselement (Zusatzhülse) und stellen die Einkopplung durch eine axiale Verschiebung der Faserführung ein. Dies ist dementsprechend nur mit einem zusätzlichen Justageprozeß und mit der oben erwähnten Zusatzhülse als zusätzlichem Montageelement möglich. Dies beeinträchtigt die mechanische Gesamtstabilität des Bauelements und erhöht die Gesamt-Herstellkosten des Bauelements durch den zusätzlichen Justageschritt und das zusätzliche Montageelement.

Der vorliegenden Erfindung liegt somit die Aufgabe zugrunde, ein faseroptisches Sende-Bauelement und ein Verfahren zu seinem Zusammenbau anzugeben, durch die es ermöglicht wird, während der Herstellung eine definierte Einkopplung der von einer Lichtemissionseinrichtung emittierten Lichtleistung in eine Lichtleitfaser zielsicher, präzise und ohne erhöhten Justage-, Herstellungs- und Kostenaufwand einstellen zu können.

Diese Aufgabe wird durch die Merkmale der unabhängigen Patentansprüche gelöst. Demgemäß beschreibt die vorliegende Erfindung ein faseroptisches Sende-Bauelement aus der Klasse der Receptacle-Laser, mit einer Lichtemissionseinrichtung, die von einem Gehäuse umgeben ist, und einer Justagehülse, die an ihrer einen Stirnseite mit dem Gehäuse verbunden ist und sich in Richtung einer Hauptabstrahlrichtung des aus dem Gehäuse austretenden Strahlungsbündels der Lichtemissionseinrichtung erstreckt, und an deren anderer Stirnseite eine Lichtleitfaser derart einführbar und befestigbar ist, daß das Strahlungsbündel in die Lichtleitfaser einkoppelbar ist, wobei die Justagehülse an ihrer einen Stirnseite eine Bodenplatte mit einer zentralen Öffnung aufweist, und an der Bodenplatte ein die Öffnung überdeckender Polarisationsfilter mittelbar oder unmittelbar befestigt ist.

Die Erfindung beschreibt ebenso ein faseroptisches Sende-Bauelement aus der Klasser der Pigtail-Laser, bei welchem anstelle der vorerwähnten Justagehülse ein Faserflansch an seiner einen Oberfläche mit dem Gehäuse verbunden ist und an seiner anderen Oberfläche eine Lichtleiterfaser derart in einer zentralen Öffnung des Faserflansches befestigt ist, daß ein aus dem Gehäuse austretendes Strahlungsbündel der Lichtemissionseinrichtung in die Lichtleitfaser einkoppelbar ist.

Der Faserflansch ist demnach wie die vorerwähnte Bodenplatte einer Justagehülse geformt, wobei jedoch in der zentralen Öffnung eine Lichtleitfaser fest montiert ist.

Bei der Einstellung des Anteils der in die Lichtleitfaser eingekoppelten Lichtleistung wird somit von der Tatsache Gebrauch gemacht, daß die Lichtemissionseinrichtung einen Halbleiterlaser enthält, der ein Strahlungsbündel mit einer definierten Polarisationsrichtung emittiert. Die Winkelstellung des Polarisationsfilters bestimmt somit den transmittierten Anteil des Strahlungsbündels durch das Polarisationsfilter und somit den Anteil der in die Lichtleitfaser eingekoppelten Strahlung.

Weiterhin beschreibt die vorliegende Erfindung ebenso ein Verfahren zum Zusammenbau eines faseroptischen Sende-Bauelements. Dieses Verfahren beruht darauf, daß das Lasergehäuse und die Justagehülse bzw. der Faserflansch mit dem daran befestigten Polarisationsfilter als getrennte Bauelemente vorliegen und dann aneinander befestigt werden.

Im einzelnen weist das Verfahren zum Zusammenbau eines faseroptischen Sende-Bauelements auf der Basis des Receptacle-Lasers die folgenden Verfahrensschritte auf:
- Herstellen des Lichtemissions-Bauelements und Einbau in das Gehäuse,
- Herstellen der Justagehülse und Befestigen des Polarisationsfilters an ihrer Bodenplatte,
- Inbetriebnahme der Lichtemissionseinrichtung und axiales Ausrichten der Justagehülse auf die Hauptabstrahlrichtung der Lichtemissionseinrichtung mit in die Justagehülse eingesteckter Faser,
- Messen der Lichtleistung der durch das Polarisationsfilter hindurchgetretenen Lichtstrahlung in der eingesteckten Glasfaser in Abhängigkeit von einer axialen Winkelposition der Justagehülse,
- Befestigen der Justagehülse an dem Gehäuse bei einer axialen Winkelposition, sobald die Lichtleistung einen vorherbestimmten Wert bei dieser axialen Winkelposition annimmt.

Das Verfahren zum Zusammenbau eines faseroptischen Sende-Bauelements auf der Basis des Pigtail-Lasers unterscheidet sich von dem vorgenannten Verfahren darin, daß anstelle der Justagehülse ein Faserflansch hergestellt wird, in dessen zentraler Öffnung eine Lichtleitfaser montiert wird und auf der der Lichtemissionseinrichtung zugewandten Oberfläche ein die zentrale Öffnung überdeckender Polarisationsfilter befestigt wird.

Vorzugsweise sind das Gehäuse und die Justagehülse bzw. der Faserflansch zylindrischsymmetrisch und die Zylinderachsen und die Hauptabstrahlrichtung fallen zusammen. Eine für die Befestigung des Gehäuses und der Justagehülse praktische Ausführungsform besteht darin, daß das Gehäuse und die Justagehülse jeweils einen Montageflansch, d.h. eine sich in radialer Richtung auf dem gesamten Umfang erstreckende Befestigungsfläche, aufweisen, an welcher sie miteinander befestigt werden können. Beim Ausricht- und Justagevorgang können die beiden Bauelemente an ihren Montageflanschen aneinandergelegt und gegeneinander verdreht werden, bis die gewünschte Lichtleistung erreicht ist.

Als Polarisationsfilter kann beispielsweise ein kostengünstiger Gitter- oder Folienpolarisator oder Kristallpolarisator verwendet werden. Die Verdrehung der Justagehülse bzw. des Faserflansches und des daran befestigten Polarisationsfilters relativ zu dem Gehäuse und der darin angeordneten Lichtemissionseinrichtung bewirkt eine Verdrehung der Polarisationsrichtung der von der Lichtemissionseinrichtung emittierten Laserstrahlung und der Durchlaßrichtung des Polarisationsfilters gegeneinander. Der Polarisationsfilter ist so ausgeführt, daß seine Polarisationsebene im wesentlichen parallel zu der Schwingungsebene des Laserstrahlbündels liegt. Dies entspricht somit der gleichen Ausführung, wie sie für optische Isolatoren verwendet wird.

In einer bevorzugten Ausführungsform wird der Polarisationsfilter an der Bodenplatte der Justagehülse bzw. an dem Faserflansch angeklebt. Um mögliche Rückkopplungen auf die Laserstrahlungsquelle auszuschließen, wird der Polarisationsfilter vorzugsweise derart befestigt, daß seine Hauptoberflächen geringfügig gegen die Einfallsrichtung des Laserstrahlbündelsgeneigt sind. Zu diesem Zweck können auf der Bodenplatte der Justagehülse bzw. auf der dafür vorgesehenen Oberfläche des Faserflanschs geeignete Elemente, wie Vorsprünge, geformt oder auch eine geneigte Befestigung in einer Öffnung ermöglicht sein, durch die eine entsprechend geneigte schräge Fläche gebildet wird, auf der der Polarisationsfilter aufgebracht werden kann.

In einer weiteren Ausführungsform der vorliegenden Erfindung kann jedoch der Polarisationsfilter auch auf einem Befestigungselement, wie einem Stück gebogenen Blech, befestigt werden, welches seinerseits an der Justagehülse oder dem Faserflansch angebracht ist.

Durch das erfindungsgemäße faseroptische Sende-Bauelement und das Verfahren zu seinem Zusammenbau wird das Problem der einstellbaren Einkopplung der Laserstrahlung auf elegante Weise gelöst. Ohne zusätzliche Montageelemente kann die Einkopplung durch einfache Drehung der Justagehülse oder des Faserflanschs eingestellt werden, worauf die Befestigung bei der ermittelten Winkelposition vorgenommen wird. Die erfindungsgemäße Anordnung ist insbesondere für die Anwendungen von hervorragender Bedeutung, bei denen nicht die volle vom Laser emittierte Lichtleistung benötigt wird, sondern ein genau definierter geringerer Betrag. Diese reduzierte Lichtleistung läßt sich somit während der Justage durch die bei den meisten Justage-Automaten vorhandene Drehjustage präzise einstellen. Damit ist es z.B. möglich, zu einem vordefinierten Monitorstrom eine entsprechend festgelegte emittierte Lichtleistung in der Faser einzustellen. Diese besondere Option ermöglicht es dem System-Hersteller, diese Bauelemente ohne notwendige kostenträchtige Nachtrimmung von entsprechenden Widerständen von Hand auf der Platine direkt betreibbar vollmaschinell einzubauen.

Ein weiterer Vorteil der erfindungsgemäßen Anordnung gegenüber dem Stand der Technik besteht darin, für die als Teil der Lichtemissionseinrichtung üblicherweise verwendete Einlinsen-Koppeloptik die maximale Konvergenz des emittierten Strahlungsbündels so einzustellen, daß sie optimal an die Faserapertur angepaßt ist, eine gezielte Einkopplung in die Faser erlaubt und gleichzeitig durch die entsprechende Divergenz des Strahles hinter dem Fokus nahezu die gleiche Augensicherheit bei nicht gesteckter Faser gewährleistet, wie eine offene Single-Mode-Faser, und damit keine zusätzlichen Schutzmaßnahmen erforderlich macht.

Im folgenden werden bevorzugte Ausführungsbeispiele der vorliegenden Erfindung anhand eines Receptacle-Lasers in Verbindung mit den Figuren näher erläutert. Es zeigen:
- Fig. 1: einen Längsschnitt durch ein erfindungsgemäßen faseroptisches Sende-Bauelement gemäß einer ersten Ausführungsform der vorliegenden Erfindung;
- Fig. 2: einen Längsschnitt durch ein faseroptisches Sende-Bauelement gemäß einer zweiten Ausführungsform der vorliegenden Erfindung.

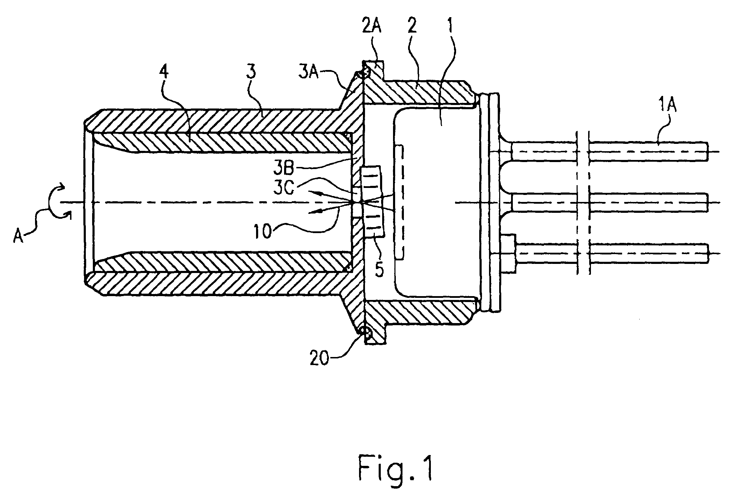

Der in Fig. 1 dargestellte Längsschnitt eines faseroptischen Sende-Bauelements zeigt eine Lichtemissionseinrichtung 1, die in ein zylindersymmetrisches, an beiden Stirnseiten offenes Gehäuse 2 eingesetzt ist. Die Lichtemissionseinrichtung 1 enthält in ihrem Inneren eine Laserstrahlquelle, insbesondere einen Halbleiterlaser, der über Anschlußpins 1A mit einer Spannungsquelle verbunden werden kann. Mit Hilfe einer an sich im Stand der Technik bekannten Ein-Linsen-Koppeloptik wird ein konvergent aus der Lichtemissionseinrichtung austretendes Strahlungsbündel 10 erzeugt, das in eine Lichtleitfaser eingekoppelt werden soll. Auf der den Anschlußpins 1A gegenüberliegenden Seite des Gehäuses 2 ist dieses mit einer ebenfalls zylindersymmetrischen Justagehülse 3 verbunden. Bevorzugterweise fallen die Zylinderachsen des Gehäuses 2 und der Justagehülse 3 sowie die Hauptabstrahlrichtung der Lichtemissionseinrichtung 1 zusammen. Ebenso bevorzugtermaßen sind das Gehäuse 2 und die Justagehülse 3 im Querschnitt kreisförmig ausgeführt.

Für den Zweck der Befestigung der Justagehülse 3 an dem Gehäuse 2 weisen beide Bauelemente auf den ihnen gegenüberliegenden Stirnseiten jeweils einen radial nach außen verlaufenden Flansch 2A, 3A über den gesamten Umfang auf. Dabei kann - wie im Ausführungsbeispiel der Fig. 1 vorgesehen - das Gehäuse 2 einen größeren Innendurchmesser als die Justagehülse 3 aufweisen. Es muß nur gewährleistet sein, daß der Flansch 3A der Justagehülse 3 eine ausreichende radiale Breite aufweist, so daß er mit dem Flansch 2A des Gehäuses 2 um den gesamten Umfang überlappende Befestigungsflächen bilden kann. In diesen Befestigungsflächen wird für die Befestigung vorzugsweise eine umlaufende Schweißnaht 20 erzeugt.

Die Justagehülse 3 weist vorzugsweise in ihrem Innern eine formschlüssig mit ihrem Innendurchmesser eingeschobene Justagehülse 4 auf, die zumeist aus einer Keramik oder einem Kunststoff geformt ist. Diese Justagehülse 4 hat die Aufgabe, eine Lichtleitfaser (nicht dargestellt) derart zu haltern, daß diese auf der Zylinderachse zentriert ist und mit ihrem lichteintrittsseitigen Ende bis zu dem Boden der Justagehülse 3 vorgeschoben werden kann. Dies ist an sich im Stand der Technik bekannt und soll hier nicht weiter erörtert werden.

Der Boden der Justagehülse 3 ist durch eine Bodenplatte 3B gebildet, die in radialer Richtung in die Bodenfläche des Flanschs 3A ausläuft und eine zentrale Bohrung 3C für den Durchtritt der Laserstrahlung aufweist.

Das aus der Lichtemissionseinrichtung 1 konvergent austretende Strahlungsbündel 10 wird durch die in der Lichtemissionseinrichtung 1 enthaltene Koppeloptik derart fokussiert, daß sich sein Fokus an der lichteintrittsseitigen Stirnseite der Justagehülse 4, somit am lichteintrittsseitigen Ende der Lichtleitfaser 3, befindet. Vor Eintritt in die Lichtleitfaser ist das Strahlungsbündel 10 jedoch durch einen Polarisationsfilter 5 hindurchgetreten, durch welches seine Intensität auf einen vorherbestimmten Wert reduziert wurde. Der Polarisationsfilter 5, der beispielsweise durch ein Stück eines Gitter- oder Folienpolarisators gebildet werden kann, weist in einer Ebene, die im wesentlichen der Schwingungsebene des Strahlungsbündels 10 parallel liegt, eine Durchlaßrichtung auf. Somit kann durch die Winkelposition, mit der die Justagehülse 3 und der an ihrer Bodenplatte 3B befestigte Polarisationsfilter 5 relativ zu dem Gehäuse 2 an dieses befestigt werden, die in die Justagehülse 3 bzw. die Justagehülse 4 und somit in die Lichtleitfaser eingekoppelte Lichtleistung des Strahlungsbündels 10 festgelegt werden. In dem Ausführungsbeispiel der Fig. 1 wird der Polarisationsfilter 5 direkt an der Bodenplatte 3B befestigt, vorzugsweise aufgeklebt, wobei er die zentrale Öffnung 3C der Bodenplatte 3B vollständig überlappt. Zur Vermeidung von schädlichen Rückreflexionen von den Hauptoberflächen des Polarisationsfilters 5 in die Lichtemissionseinrichtung 1 wird der Polarisationsfilter 5 mit einer geringfügigen Schräglage an der Bodenplatte 3B befestigt.

Der Polarisationsfilter 5 kann auch auf der anderen Seite der Bodenplatte 3B oder in der Öffnung befestigt werden.

Bei dem Zusammenbau des faseroptischen Sende-Bauelements der Fig. 1 wird zunächst das Gehäuse 2 und die Justagehülse 3 separat voneinander hergestellt. In getrennten Fertigungsprozessen wird dann in das Gehäuse 2 die Lichtemissionseinrichtung 1 eingesetzt. Andererseits wird die Justagehülse 3 an ihrer Bodenplatte 3B mit dem Polarisationsfilter 5 versehen und gegebenenfalls wird in die Justagehülse 3 die Hülse 4 eingesetzt und die entsprechende Lichtleitfaser eingeführt. Dann wird die Lichtemissionseinrichtung 1 in Betrieb gesetzt, so daß sie ein Laserstrahlungsbündel 10 emittiert. Vorzugsweise unter Zuhilfenahme eines geeigneten Justage-Automaten wird dann die Justagehülse 3 koaxial mit dem Gehäuse 2 ausgerichtet und an dieses angenähert, so daß das Laserstrahlungsbündel 10 durch den Polarisationsfilter 5 hindurchfällt und in die Lichtleitfaser eingekoppelt wird. Bei stationär gelagertem Gehäuse 2 wird dann die Justagehülse 3 - wie durch den Pfeil A angedeutet - um ihre Zylinderachse in Drehbewegung versetzt, so daß die in die Lichtleitfaser eingekoppelte Lichtleistung variiert. Sobald die gewünschte, in die Lichtleitfaser einzukoppelnde Lichtleistung erreicht ist, wird die Drehbewegung gestoppt. In der erreichten Winkelposition der Justagehülse 3 wird diese an dem Gehäuse 2 befestigt. Vorzugsweise wird auch die Drehbewegung der Justagehülse 3 durch geeignete Drehvorrichtungen an dem Justage-Automaten vorgenommen. Es kann auch vorgesehen sein, daß die gewünschte Lichtleistung an einer Steuereinrichtung des Justage-Automaten eingegeben werden kann, und die Drehbewegung der Justagehülse 3 bei Erreichen der eingegebenen Lichtleistung selbstätig beendet wird. Auch der nachfolgende Befestigungsvorgang, der vorzugsweise durch Schweißen erfolgt, kann vollautomatisch durchgeführt werden.

Wahlweise kann bei dem Zusammenbau auch die Justagehülse stationär gehalten und das Gehäuse gedreht werden.

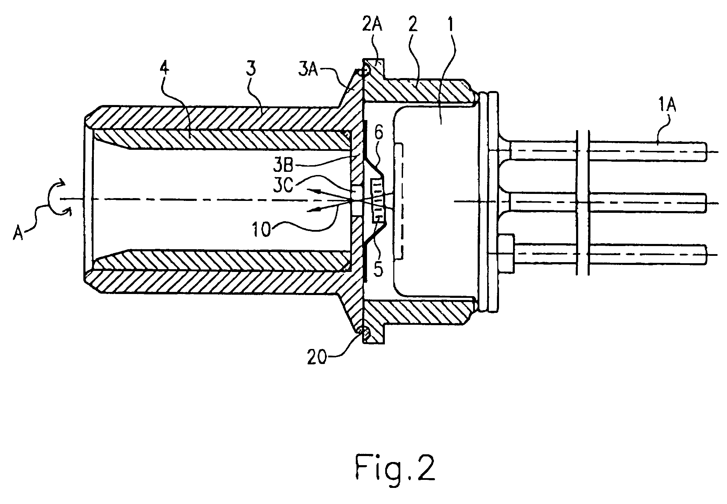

In Fig. 2 ist ein zweites Ausführungsbeispiel eines erfindungsgemäßen faseroptischen Sende-Bauelements im Längsschnitt dargestellt. Die dem Ausführungsbeispiel in Fig. 1 entsprechenden oder wirkungsgleichen Elemente sind mit den gleichen Bezugszeichen versehen und werden im folgenden nicht weiter erläutert. Der Unterschied zu dem Ausführungsbeispiel in Fig. 1 liegt lediglich in der Art der Befestigung des Polarisationsfilters 5. In dem Ausführungsbeispiel der Fig. 2 wird der Polarisationsfilter 5 nicht direkt an der Bodenplatte 3B der Justagehülse 3 befestigt, sondern indirekt durch ein Befestigungselement 6 gehaltert, welches seinerseits an der Justagehülse 3 befestigt ist. Bei dem Befestigungselement 6 kann es sich beispielsweise um ein Stück Blech handeln, das mit Befestigungsflächen versehen ist und mit diesen beidseits der Öffnung 3C an die Bodenplatte 3B befestigt, beispielsweise angeklebt oder angeschraubt, ist. In seinem zentralen Abschnitt weist das Befestigungselement 6 eine gegenüber der Ausbreitungsrichtung des Laserstrahlungsbündels 10 geringfügig geneigte Fläche auf, die eine zentrale Öffnung aufweist und an der der Polarisationsfilter 5 angeklebt wird. Eine derartige Ausführungsform hat den Vorteil, daß der Polarisationsfilter 5 gegebenenfalls von einer Justagehülse 3 wieder entfernt werden kann, ohne dabei beschädigt zu werden.

Auch das faseroptische Sende-Bauelement der Ausführungsform der Fig. 2 kann nach demselben Verfahren zusammengebaut werden wie das faseroptische Sende-Bauelement der Fig. 1.

Die vorliegende Erfindung ist jedoch nicht auf faseroptische Sende-Bauelemente für steckbare Lichtleitfasern, also Receptacle-Laser, beschränkt, sondern kann ebenso, d.h. mit gleicher Effektivität hinsichtlich der einstellbaren Kopplung, auch bei sogenannten Pigtaillasern verwendet werden, indem der Polarisationsfilter direkt auf den Pigtail-Faserflansch montiert wird. Dieser Pigtailfaser-Flansch wird bei dieser Ausführung von faseroptischen Sende-Bauelementen anstelle der Justagehülse 3 der Fig. 1 und 2 an das Gehäuse 2 bzw. den Gehäuseflansch 2A befestigt. Er hat somit im Prinzip dieselbe Form wie die Bodenplatte 3B einer Justagehülse 3. Im Gegensatz zu der Justagehülse 3 ist bei einem Faserflansch die Lichtleitfaser fest mit dem Faserflansch verbunden, wohingegen bei der Justagehülse 3 die Lichtleitfaser eingesteckt werden kann. Im übrigen weist bei dieser Ausführungsform der vorliegenden Erfindung der Faserflansch ebenso ein Polarisationsfilter auf, welches auf seiner der Lichtemissionseinrichtung zugewandten Oberfläche befestigt ist. Auch der Pigtail-Faserflansch kann wie die Justagehülse 3 durch Messen der Lichtintensität des durch den Polarisationsfilter hindurchgetretenen Laserstrahlbündels und gleichzeitiges Drehen um seine Zylinderachse und anschließendes Befestigen an dem Gehäuse 2 bei Erreichen der gewünschten Lichtintensität mit dem Gehäuse 2 zu einem faseroptischen Sende-Bauelement zusammengebaut werden.

## Patentansprüche

1. Faseroptisches Sende-Bauelement, mit
- einer Lichtemissionseinrichtung (1), die von einem Gehäuse (2) umgeben ist, und
- einer Justagehülse (3), die
- an ihrer einen Stirnseite mit dem Gehäuse (2) verbunden ist und sich in Richtung einer Hauptabstrahlrichtung des aus dem Gehäuse (2) austretenden Strahlungsbündels (10) der Lichtemissionseinrichtung (1) erstreckt, und
- an deren anderer Stirnseite eine Lichtleitfaser derart einführbar und befestigbar ist, daß das Strahlungsbündel (10) in die Lichtleitfaser einkoppelbar ist,
**dadurch gekennzeichnet**, daß
- die Justagehülse (3) an ihrer einen Stirnseite eine Bodenplatte (3B) mit einer zentralen Öffnung (3C) aufweist, und
- an der Bodenplatte (3B) ein die Öffnung (3C) überdeckender Polarisationsfilter (5) mittelbar oder unmittelbar befestigt ist.

2. Faseroptisches Sende-Bauelement mit
- einer Lichtemissionseinrichtung (1), die von einem Gehäuse (2) umgeben ist, und
- einem Faserflansch, der
- an seiner einen Oberfläche mit dem Gehäuse (2) verbunden ist, und
- an seiner anderen Oberfläche eine Lichtleitfaser derart in einer zentralen Öffnung des Faserflanschs befestigt ist, daß ein aus dem Gehäuse (2) austretendes Strahlungsbündel der Lichtemissionseinrichtung (1) in die Lichtleitfaser einkoppelbar ist,
**dadurch gekennzeichnet**, daß
- an der der Lichtemissionseinrichtung (1) zugewandten Oberfläche des Faserflanschs ein die zentrale Öffnung überdeckender Polarisationsfilter mittelbar oder unmittelbar befestigt ist.

3. Faseroptisches Sende-Bauelement nach Anspruch 1 oder 2,
**dadurch gekennzeichnet**, daß
- der Polarisationsfilter (5) an einem Befestigungselement (6) befestigt ist, das seinerseits mit der Justagehülse (3) oder dem Faserflansch verbunden ist.

4. Faseroptisches Sende-Bauelement nach Anspruch 3,
**dadurch gekennzeichnet**, daß
- das Befestigungselement (6) eine zentrale Befestigungsfläche aufweist, an der der Polarisationsfilter (5) befestigt ist, wobei die zentrale Befestigungsfläche eine Durchgangsöffnung aufweist,
- das Befestigungselement (6) ferner seitliche Befestigungsflächen aufweist, mit denen das Befestigungselement (6) beidseits der zentralen Öffnung (3C) befestigt ist.

5. Faseroptisches Sende-Bauelement nach Anspruch 1 oder 2,
**dadurch gekennzeichnet**, daß
- der Polarisationsfilter (5) an der Bodenplatte (3B) der Justagehülse (3) oder der der Lichtemissionseinrichtung (1) zugewandten Oberfläche des Faserflanschs angeklebt ist.

6. Faseroptisches Sende-Bauelement nach einem der vorhergehenden Ansprüche,
**dadurch gekennzeichnet**, daß
- das Gehäuse (2) und die Justagehülse (3) an den einander zugewandten Stirnseiten jeweils einen Flansch (2A, 3A) aufweisen, an welchem sie aneinander befestigt sind.

7. Faseroptisches Sende-Bauelement nach Anspruch 6,
**dadurch gekennzeichnet**, daß
- das Gehäuse (2) und die Justagehülse (3) durch eine Schweißverbindung (20) aneinander befestigt sind.

8. Faseroptisches Sende-Bauelement nach einem der vorhergehenden Ansprüche,
**dadurch gekennzeichnet**, daß
- der Polarisationsfilter (5) derart befestigt ist, daß seine Hauptoberflächen gegenüber der Einfallsrichtung des Laserstrahlbündels (10) geringfügig geneigt ist.

9. Faseroptisches Sende-Bauelement nach Anspruch 1,
**dadurch gekennzeichnet**, daß
- die Justagehülse (3) in ihrem Inneren eine Justagehülse (4) aufweist, durch die eine Lichtleitfaser einsteckbar und zentrierbar ist.

10. Verfahren zum Zusammenbau eines faseroptischen Sende-Bauelements nach Anspruch 1, mit den Verfahrensschritten
- Herstellen der Lichtemissionseinrichtung (1) und deren Einbau in das Gehäuse (2),
- Herstellen der Justagehülse (3) und Befestigen des Polarisationsfilters (5) an ihrer Bodenplatte (3B),
- Inbetriebnahme der Lichtemissionseinrichtung (1) und axiales Ausrichten der Justagehülse (3) auf die Hauptabstrahlrichtung der Lichtemissionseinrichtung (1),
- Messen der Lichtleistung der durch den Polarisationsfilter (5) hindurchgetretenen Lichtstrahlung, die in eine eingesteckte Glasfaser eingekoppelt wird, in Abhängigkeit von einer axialen Winkelposition der Justagehülse (3) relativ zu dem Gehäuse (2),
- Befestigen der Justagehülse (3) an dem Gehäuse (2) bei einer axialen Winkelposition, sobald die Lichtleistung einen vorherbestimmten Wert bei dieser axialen Winkelposition annimmt.

11. Verfahren zum Zusammenbau eines faseroptischen Sende-Bauelements nach Anspruch 2, mit den Verfahrensschritten
- Herstellen der Lichtemissionseinrichtung (1) und deren Einbau in das Gehäuse (2),
- Herstellen des Faserflanschs und und Befestigen des Polarisationsfilters an seiner der Lichtemissionseinrichtung (1) zugewandten Oberfläche,
- Inbetriebnahme der Lichtemissionseinrichtung (1) und axiales Ausrichten des Faserflanschs auf die Hauptabstrahlrichtung der Lichtemissionseinrichtung (1),
- Messen der Lichtleistung der durch den Polarisationsfilter hindurchgetretenen Laserstrahlung auf der Hauptabstrahlrichtung in Abhängigkeit von einer axialen Winkelposition des Faserflanschs relativ zu dem Gehäuse,
- Befestigen des Faserflanschs an dem Gehäuse bei einer axialen Winkelposition, sobald die Lichtleistung einen vorherbestimmten Wert bei dieser axialen Winkelposition annimmt.

12. Verfahren nach Anspruch 10 oder 11,
**dadurch gekennzeichnet**, daß
- mindestens ein Verfahrensschritt durch einen Justage-Automaten ausgeführt wird.
